Europäisches Patentamt

European Patent Office

Office européen des brevets

(11) Veröffentlichungsnummer: **0 269 103**
**A2**

(12) **EUROPÄISCHE PATENTANMELDUNG**

(21) Anmeldenummer: 87117473.6

(22) Anmeldetag: 26.11.87

(51) Int. Cl.4: **B23C 5/20**

(30) Priorität: 27.11.86 AT 3165/86

(43) Veröffentlichungstag der Anmeldung:
01.06.88 Patentblatt 88/22

(84) Benannte Vertragsstaaten:
BE DE ES FR GB IT NL SE

(71) Anmelder: PLANSEE TIZIT GESELLSCHAFT M.B.H.

A-6600 Reutte/Tirol(AT)

(72) Erfinder: Urschitz, Harald
Dr. Schwarzkopf-Strasse 35
A-6600 Reutte(AT)

(74) Vertreter: Lohnert, Wolfgang, Dr.
Metallwerk Plansee GmbH
A-6600 Reutte, Tirol(AT)

(54) Schneidkörper für rotierende Werkzeuge, insbesondere zum Fräsen.

(57) Die Erfindung betrifft einen Schneidkörper mit umlaufender Spanleitstufe für rotierende Werkzeuge, insbesondere zum Fräsen.

Die Hauptschneidkante (1) des Schneidkörpers fällt zumindest in einem an die Planschneidkante (2) angrenzenden Teilabschnitt (5) zur Mitte der Hauptschneidkante (1) hin konkav gekrümmt ab. Der Neigungswinkel $\lambda$ der Tangente an den gekrümmten Abschnitt (5) der Hauptschneidkante, welcher an die Planschneidkante (2) angrenzt, beträgt $35° > \lambda \geq 5°$. Durch diese spezielle Ausgestaltung der Hauptschneidkante wird eine für die Spanabfuhr vorteilhafte Spanformung und -bildung erreicht. Darüberhinaus wird es ermöglicht, auch Spanleitstufen mit sehr großen positiven Spanwinkeln einzubringen, wobei diese Spanwinkel entlang der gesamten Schneidkantenerstreckung zumindest annähernd denselben Wert aufweisen können, so daß die erfindungsgemäßen Schneidkörper besonders vorteilhaft zur Zerspanung von Leichtmetallen, Kunststoffen oder ähnlichen Materialien eingesetzt werden können.

Fig. 1

# SCHNEIDKÖRPER FÜR ROTIERENDE WERKZEUGE, INSBESONDERE ZUM FRÄSEN

Die Erfindung betrifft einen Schneidkörper für rotierende Werkzeuge, insbesondere zum Fräsen, mit mindestens einer Hauptschneidkante, welche jeweils - in Draufsicht - unter einem vorzugsweise stumpfen Winkel an mindestens eine Planschneidkante angrenzt und wobei der Schneidkörper an die Schneidkanten anschließende Spanleitstufen mit zu einem Mittelteil hin abfallenden Spanleitstufenflanken aufweist.

Wendeschneidplatten zum Fräsen werden in der Regel mit geraden, horizontal verlaufenden Schneidkanten vorwiegend ohne Spanleitstufen ausgeführt. Vielfach sind diese Wendeschneidplatten mit einer oder mehreren Neben- bzw. Planschneidkanten versehen, die unter einem stumpfen Winkel mit den Hauptschneidkanten in Verbindung stehen. Auf diese Weise wird eine Stabilisierung der besonders bruchgefährdeten Schneidecken und darüberhinaus eine verbesserte Oberflächenqualität der bearbeiteten Oberfläche erreicht.

Die Schnittkräfte mindernden und die Standzeit fördernden positiven Spanwinkel werden durch Kippen der Wendeschneidplatten im Werkzeug realisiert, was vielfach mit Positionier-und Spannproblemen verbunden ist und für jede Werkstoffgruppe optimierte, voneinander abweichende Spanwinkel und damit ein eigenes Trägerwerkzeug notwendig macht.

Gleichzeitig müssen diese Wendeschneidplatten große Freiwinkel aufweisen, um - in rotierenden Werkzeugen montiert - umfangseitig freizugehen. Aus Festigkeitsgründen können diese Freiwinkel nicht beliebig groß gewählt werden, so daß sehr große positive Spanwinkel, welche insbesondere bei der Zerspanung von Leichtmetallen, Kunststoffen oder ähnlichen Materialien sehr vorteilhaft sind, nicht realisiert werden können.

In Fällen wo sehr große positive Spanwinkel erforderlich sind, ist man daher dazu übergegangen, in die Wendeschneidplatten Spanleitstufen einzuschleifen oder einzupressen.

Nachteilig bei den eingeschliffenen Spanleitstufen ist, daß sich der große positive Spanwinkel nur im Bereich der Hauptschneidkante erreichen läßt. Im Übergang zur Neben-bzw. Planschneidkante wird der Spanwinkel immer kleiner und dann sogar negativ. Dies führt in der Folge bei Einsatz dieser Wendeschneidplatten zu einem Aufreißen der bearbeiteten Oberfläche und damit zu unzureichenden Oberflächenqualitäten.

Auch bei den eingepreßten Spanleitstufen ist infolge der geraden in einer horizontalen Ebene verlaufenden Schneidkanten die Realisierung eines großen positiven Spanwinkels im Bereich der Neben-bzw. Planscheidkanten nicht voll befriedigend gelöst.

Nachteilig bei diesen Wendeschneidplatten ist, daß die Spanlenkung aufgrund der geraden, horizontal verlaufenden Schneidkanten sehr eingeschränkt ist und im wesentlichen nur durch die Werkzeugwinkel bestimmt wird.

Aus der DE-OS 28 10 824 sowie der EU 125 568 sind Schneideinsätze bekannt, die aus horizontalen und geneigten Abschnitten zusammengesetze Schneidkanten aufweisen. Durch diese Ausgestaltung wird eine verbesserte Spanlenkung erreicht. Diese Schneideinsätze weisen jedoch keine Planschneidkanten auf, woraus abzuleiten ist, daß diese Schneideinsätze in erster Linie für die Drehbearbeitung geeignet sind.

Die Aufgabe der vorliegenden Erfindung ist es, einen Schneidkörper für rotierende Werkzeuge, insbesondere zum Fräsen, mit mindestens einer Haupt-und Planschneidkante zu schaffen, bei dem die Spanlenkung in einem weiten Bereich beeinflußbar ist und der auch die Einformung von Spanleitstufen mit größten positiven Spanwinkeln entlang der gesamten Schneidkantenerstreckung ermöglicht und der gleichzeitig die erforderliche Festigkeit aufweist, um der großen mechanischen Belastung ohne frühzeitige Beschädigung zu widerstehen, welche durch den beim Fräsen auftretenden unterbrochenen Schnitt hervorgerufen wird.

Erfindungsgemäß wird dies dadurch erreicht, daß -in Seitenansicht - die Hauptschneidkante zumindest in einem an die Planschneidkante angrenzenden Teilabschnitt zur Mitte der Hauptschneidkante hin konkav gekrümmt abfällt, wobei der Neigungswinkel $\lambda$ der Tangente an den gekrümmten Abschnitt der Hauptschneidkante an der Grenze zur Planschneidkante $35° > \lambda \geqq 5°$ beträgt.

Dadurch, daß die Hauptschneidkante konkav gekrümmt mit einem Neigungswinkel der Tangente an den gekrümmten Abschnitt an der Grenze zur Planschneidkante innerhalb der angegebenen Grenzen verläuft, wird es ermöglicht, daß die vom Drehen bekannte Schneidkantengeometrie, nämlich zusammengesetzte und mit unterschiedlicher Neigung verlaufende Schneidkanten, die eine ausgezeichnete Spanlenkung bewirkt, auch auf Schneidkörper für rotierende Werkzeuge, insbesondere zum Fräsen übertragen werden kann, ohne daß es infolge unkontrollierter Spanbildung durch Spanschläge zu einer vorzeitigen Zerstörung des Schneidkörpers kommt.

Durch die spezielle Schneidkantenausgestaltung wird insbesondere erreicht, daß bei kleinen Spantiefen und kleinen Schnittkräften ein großer Neigungswinkel vorhanden ist, während bei zunehmenden Spantiefen und damit größeren Schnittkräften der Neigungswinkel gering und der Keilwinkel groß ist, so daß eine Bruchgefährdung der Wendeschneidplatte weitgehend ausgeschlossen ist. Zusätzlich ergeben sich geringe Schnittkräfte und günstige Ein-und Austrittsbedingungen durch allmählichen Eingriff der Schneidkante.

Darüberhinaus wird eine für die Spanabfuhr vorteilhafte Spanformung und -bildung erreicht. Durch den allmählichen Schneidkeileingriff in das Werkstück kommt es kaum zu Rattererscheinungen, was wiederum ausgezeichnete Oberflächengüten zur Folge hat.

Daneben wird es durch die erfindungsgemäße Schneidkantenausgestaltung ermöglicht, auch Spanleitstufen mit sehr großen positiven Spanwinkeln einzubringen, wobei diese Spanwinkel entlang der gesamten Schneidkantenerstreckung zumindest annähernd denselben Wert aufweisen können, so daß die erfindungsgemäßen Schneidkörper besonders vorteilhaft zur Zerspanung von Leichtmetallen, Kunststoffen oder ähnlichen Materialien eingsetzt werden können.

In einer besonders vorteilhaften Ausgestaltung eines Schneidkörpers für rotierende Werkzeuge ist er als quadratische Wendeschneidplatte zum Fräsen mit horizontal und gerade verlaufenden Planschneidkanten ausgeführt, die symmetrisch zwischen den benachbarten Hauptschneidkanten verlaufen, wobei die abfallenden Spanleitstufenflanken im Bereich der Planschneidkanten Flächen sind, deren jeweiligen Grenzlinien - zumindest in Draufsicht - mit den benachbarten abfallenden Spanleitstufenflanken der abfallenden Abschnitte der Hauptschneidkanten Geraden sind, wobei die Lage dieser Geraden jeweils einen Winkelbereich einschließt, der zum einen durch die gedachte Verlängerung der Geraden durch den Mittelpunkt des Inkreises und zum anderen durch die Geraden begrenzt ist, welche unter einem Winkel von 120° zu den Planschneidkanten verlaufen, daß weiters der Spanwinkel $\gamma$ der abfallenden Spanleitstufenflanken entlang der gesamten Schneidkantenerstreckung in etwa den gleichen Wert aufweist und daß die abfallenden Spanleitstufenflanken in einen gegenüber den Schneidkanten abgesenkten horizontalen Mittelteil übergehen.

Durch diese spezielle Ausgestaltung des Schneidkörpers wird eine besonders gute Spanabfuhr erreicht. Darüberhinaus werden Rattererscheinungen weitgehendst vermieden und ausgezeichnete Oberlfächengüten erreicht.

Im folgenden wird die Erfindung an Hand von Figuren näher erläutert.
Es zeigen:

Figur 1 eine erfindungsgemäße Wendeschneidplatte zum Fräsen in Draufsicht

Figur 2 die Wendeschneidplatte nach Figur 1 in Seitenansicht

Figur 3 die Wendeschneidplatte nach Figur 1 im Schnitt

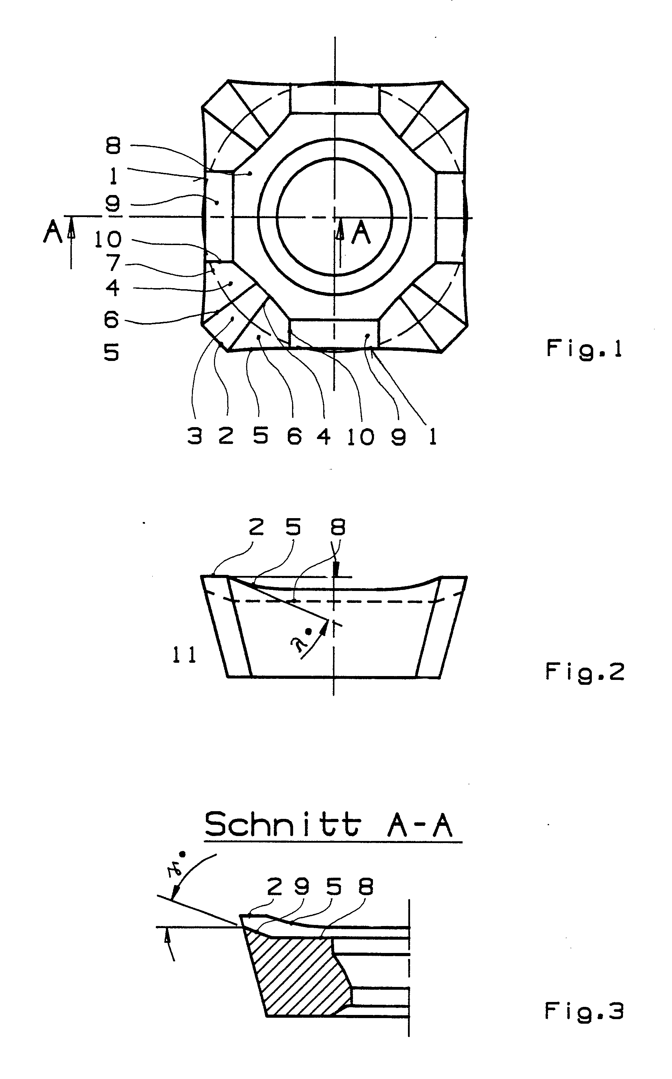

In einer besonders vorteilhaften Ausgestaltung der Erfindung gemäß den Figuren 1-3 ist der Schneidkörper als quadratische Wendeschneidplatte mit vier Hauptschneidkanten -1-und vier Planschneidkanten -2-in den Schneidecken ausgebildet. Die Hauptschneidkanten -1-schließen mit den Planschneidkanten -2-jeweils einen Winkel von 135° ein. Die Planschneidkanten -2-sind gerade ausgebildet und verlaufen in Seitenansicht gesehen horizontal. Anschließend an die Planschneidkanten -2-weisen die Hauptschneidkanten -1-einen abfallend Abschnitt -5-auf, der konkav gekrümmt ausgebildet ist. Die beiden abfallenden Abschnitte -5-jeder Hauptschneidkante -1-gehen in einen horizontal verlaufenden Mittelabschnitt der Hauptschneidkante über. Die abfallenden Abschnitte -5-sind so festgelegt, daß die Tangenten an diese Abschnitte -5-an den Grenzen zu den Planschneidkanten -2-jeweils einen Neigungswinkel $\lambda$ von 20° aufweisen. Die Wendeschneidplatte weist eine umlaufende Spanleitstufe auf, wobei die abfallenden Spanleitstufenflanken -3-im Bereich der Planschneidkanten -2-als ebene Flächen ausgebildet sind. Die abfallenden Spanleitstufenflanken -6-im Bereich der abfallenden Abschnitte -5-der Hauptschneidkanten -1-sind als Regelflächen derart ausgebildet, daß ihre Grenzlinien -4-mit den Spanleitstufenflanken -3-und ihre Grenzlinien -10-mit den abfallenden Spanleitstufenflanken -9-der horizontalen Mittelbereiche der Hauptschneidkanten -1-als Gerade ausgebildet sind. Darüberhinaus sind die Regelflächen der Spanleitstufenflanken -6-so ausgebildet, daß die gedachten Verlängerungen der als Geraden ausgebildeten Grenzlinien -4-durch den Mittelpunkt des Inkreises verlaufen und daß die als Geraden ausgebildeten Grenzlinien -10-senkrecht zu den horizontalen Mittelabschnitten der Hauptschneidkanten -1-verlaufen. Die abfallenden Spanleitstufenflanken -3-, -6-, -9-gehen in einen horizonral verlaufenden Mittelbereich -8-der Wendeschneidplatte über und weisen entlang der gesamten Schneidkantenerstreckung einen Spanwinkel $\gamma$ von in etwa 20° auf.

Die Figuren stellen eine besonders vorteilhafte Ausgestaltung der Erfindung dar, diese ist jedoch nicht auf diese Ausführung beschränkt. So ist es beispielsweise denkbar, die Planschneidkanten -2-konkav oder konvex auszuführen. In so einem Fall ist es besonders vorteilhaft, wenn die Freiflächen -11-der Planschneidkanten -2-der jeweiligen Form der Planschneidkante -2-so angepaßt sind, daß die senkrechte Projektion der Planschneidkanten eine Gerade ergibt. Die an die Planschneidkante -2- angrenzenden abfallenden Spanleitstufenflanken -3- sind dann ebenfalls zumindest teilweise als konkave oder konvexe Flächen ausgeführt. Auf diese Art und Weise kann eine nochmals verbesserte Werkstückoberfläche erreicht werden.

Auch ist die Form der Wendeschneidplatte nicht auf quadratische Ausführungen beschränkt. Die erfindungsgemäße Schneidkantenausgestaltung kann durchaus auch für dreieckförmige, rechteckförmige oder auch anders geformte Wendeschneidplatten zur Anwendung kommen. Die Planschneidkanten können dabei sowohl symmetrisch als auch unsymmetrisch zwischen zwei benachbarten Hauptschneidkanten verlaufen.

## Ansprüche

1. Schneidkörper für rotierende Werkzeuge, insbesondere zum Fräsen, mit mindestens einer Hauptschneidkante (1), welche jeweils - in Draufsicht-unter einem vorzugsweise stumpfen Winkel an mindestens eine Planschneidkante (2) angrenzt und wobei der Schneidkörper an die Schneidkanten (1,2) anschließende Spanleitstufen mit zu einem Mittelteil (8) hin abfallenden Spanleitstufenflanken (3,6,9) aufweist,
**dadurch gekennzeichnet,**
daß -in Seitenansicht - die Hauptschneidkante (1) zumindest in einem an die Planschneidkante (2) angrenzenden Teilabschnitt (5) zur Mitte der Hauptschneidkante (1) hin konkav gekrümmt abfällt, wobei der Neigungswinkel $\lambda$ der Tangente an den gekrümmten Abschnitt (5) der Hauptschneidkante (1) an der Grenze zur Planschneidkante (2) $35° > \lambda \geq 5°$ beträgt.

2. Schneidkörper für rotierende Werkzeuge nach Anspruch 1, dadurch gekennzeichnet, daß er als quadratische Wendeschneidplatte zum Fräsen mit horizontal und gerade verlaufenden Planschneidkanten (2) ausgeführt ist, die symmetrisch zwischen den benachbarten Hauptschneidkanten (1) verlaufen, wobei die abfallenden Spanleitstufenflanken (3) im Bereich der Planschneidkanten (2) Flächen sind, deren jeweiligen Grenzlinien (4) - zumindest in Draufsicht - mit den benachbarten abfallenden Spanleitstufenflanken (6) der abfallenden Abschnitte (5) der Hauptschneidkanten (1) Gerade sind, wobei die Lage dieser Geraden jeweils einen Winkelbereich einschließt, der zum einen durch die gedachte Verlängerung der Geraden durch den Mittelpunkt des Inkreises (7) und zum anderen durch die Geraden begrenzt ist, welche unter einem Winkel von 120° zu den Planschneidkanten (2) verlaufen, daß weiters der Spanwinkel $\gamma$ der abfallenden Spanleitstufenflanken (3,6,9) entlang der gesamten Schneidkantenerstreckung (1,2) in etwa den gleichen Wert aufweist und daß die abfallenden Spanleitstufenflanken (3,6,9) in einen gegenüber den Schneidkanten (1,2) abgesenkten horizontalen Mittelteil (8) übergehen.

**Fig.1**

**Fig.2**

## Schnitt A-A

**Fig.3**